(19) **Europäisches Patentamt**
**European Patent Office**
**Office européen des brevets**

(11) **EP 4 686 995 A1**

(12) **EUROPÄISCHE PATENTANMELDUNG**

(43) Veröffentlichungstag:
**04.02.2026   Patentblatt 2026/06**

(21) Anmeldenummer: **24191755.8**

(22) Anmeldetag: **30.07.2024**

(51) Internationale Patentklassifikation (IPC):
**G05B 23/02** $^{(2006.01)}$    **F04B 49/06** $^{(2006.01)}$
**F04B 51/00** $^{(2006.01)}$    **F04D 15/00** $^{(2006.01)}$

(52) Gemeinsame Patentklassifikation (CPC):
**G05B 23/024; F04B 49/065; F04B 51/00;**
**F04D 15/0088**

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH MA MD TN**

(71) Anmelder: **Siemens Aktiengesellschaft**
**80333 München (DE)**

(72) Erfinder: **Die Erfindernennung liegt noch nicht vor**

(74) Vertreter: **Siemens Patent Attorneys**
**Postfach 22 16 34**
**80506 München (DE)**

(54) **VERFAHREN ZUR IDENTIFIKATION UND/ODER VORHERSAGE EINER VERSTOPFUNG IN EINER PUMPE UND/ODER EINER ROHRLEITUNG DER PUMPE**

(57)     Die Erfindung betrifft ein Verfahren zur Identifikation und/oder Vorhersage einer Verstopfung in einer Pumpe (12) und/oder einer Rohrleitung der Pumpe, die durch einen Elektromotor (10) angetrieben wird, unter Verwendung der Gaußschen Prozessregression, wobei die Vorhersage basierend auf den Daten des Elektromotors (10) getroffen wird, umfassend folgende Schritte:
a) Erfassen von Messdaten des Elektromotors (10);
b) Extrahieren von Merkmalen aus den erfassten Messdaten des Elektromotors (10) zur Vorbereitung eines Datensatzes;
c) Partitionieren des Datensatzes, insbesondere mittels einer Bayesian Committee Machine, zum Erhalt einer Unterteilung in Datensätze, darunter einen Datensatz mit Trainingsdaten;
d) Modellieren der Beziehung zwischen den extrahierten Merkmalen des Elektromotors (10) und dem Auftreten einer Verstopfung in der Pumpe (12) und/oder der Rohrleitung unter Verwendung der Gaußschen Prozessregression auf den Trainingsdaten;
e) Anpassen des durch Schritt d) erhaltenen Gaußschen Prozessregressionsmodells anhand der Trainingsdaten, um eine Identifikation und/oder Vorhersage des Auftretens einer Verstopfung in der Pumpe und/oder der Rohrleitung zu ermöglichen;
f) Durchführen einer Identifikation und/oder Vorhersage des Auftretens einer Verstopfung in der Pumpe und/oder der Rohrleitung basierend auf dem angepassten Gaußschen Prozessregressionsmodell auf den Testdaten;
g) Ausgeben eines Indikators und/oder einer Warnmeldung, um das Auftreten einer Verstopfung in der Pumpe (12) und/oder der Rohrleitung anzuzeigen.

FIG 2

EP 4 686 995 A1

**Beschreibung**

Die Erfindung betrifft ein Verfahren zur Identifikation und/oder Vorhersage einer Verstopfung in einer Pumpe.

Pumpenleitungen in industriellen Systemen sind oftmals von einer Verstopfung betroffen. Wenn Pumpen verstopfen, kann dies zu erheblichen Problemen führen, z. B. zu einem geringeren Wirkungsgrad, erhöhten Wartungskosten und möglichen Stillstandszeiten.

Herkömmliche Methoden zur Überwachung und Erkennung von Verstopfungen beruhen häufig auf einfachen statistischen Modellen oder festen Schwellenwerten, die die komplexen, nichtlinearen Beziehungen zwischen verschiedenen Betriebsfaktoren und dem Ausmaß der Verstopfung nicht berücksichtigen. Herkömmliche Ansätze können manchmal zu hohen Raten von falschpositiven oder falsch-negativen Ergebnissen führen, was zu unnötigen Wartungsmaßnahmen oder übersehenen Verstopfungsereignissen führt.

Der Erfindung liegt die Aufgabe zugrunde, das Erkennen von Verstopfungen zu verbessern.

Die Lösung der Aufgabe gelingt durch Anspruch 1, d. h. ein Verfahren zur Identifikation und/oder Vorhersage einer Verstopfung in einer Pumpe und/oder einer Rohrleitung der Pumpe, die durch einen Elektromotor angetrieben wird, unter Verwendung der Gaußschen Prozessregression, wobei die Vorhersage basierend auf den Daten des Elektromotors getroffen wird, umfassend folgende Schritte:

a) Erfassen von Messdaten des Elektromotors;

b) Extrahieren von Merkmalen aus den erfassten Messdaten des Elektromotors zur Vorbereitung eines Datensatzes;

c) Partitionieren des Datensatzes, insbesondere mittels einer Bayesian Committee Machine, zum Erhalt einer Unterteilung in Datensätze, darunter einen Datensatz mit Trainingsdaten;

d) Modellieren der Beziehung zwischen den extrahierten Merkmalen des Elektromotors und dem Auftreten einer Verstopfung in der Pumpe und/oder Rohrleitung unter Verwendung der Gaußschen Prozessregression auf den Trainingsdaten;

e) Anpassen des durch Schritt d) erhaltenen Gaußschen Prozessregressionsmodells anhand der Trainingsdaten, um eine Identifikation und/oder Vorhersage des Auftretens einer Verstopfung in der Pumpe und/oder Rohrleitung zu ermöglichen;

f) Durchführen einer Identifikation und/oder Vorhersage des Auftretens einer Verstopfung in der Pumpe und/oder Rohrleitung basierend auf dem angepassten Gaußschen Prozessregressionsmodell auf den Testdaten;

g) Ausgeben eines Indikators und/oder einer Warnmeldung, um das Auftreten einer Verstopfung in der Pumpe und/oder Rohrleitung anzuzeigen.

Eine Verstopfung tritt oftmals in der Pumpe selbst und/oder in einer angeschlossenen Rohrleitung, insbesondere in einer Rohrleitung des Zu-/ Ablaufs, auf. Die Rohrleitung kann allerdings auch zur Pumpe zugehörig betrachtet werden.

Wenn im Folgenden von einer Betrachtung und/oder einem Verhalten der Pumpe die Rede ist, findet dies vorteilhaft ebenso Anwendung auf die Rohrleitung.

Vorteilhaft ist eine Ausführungsform, wonach die Messdaten des Elektromotors physikalische Parameter, Betriebsparameter und/oder Zustandsparameter des Elektromotors sind.

Die Messdaten des Elektromotors sind insbesondere Drehzahl, Energieeffizienz, Schlupffrequenz und/oder Leistung, vorzugsweise mechanische Leistung, sind.

Vorteilhaft ist eine Ausführungsform, wonach die Messdaten des Elektromotors kontinuierlich erfasst und, vorzugsweise in Echtzeit, verarbeitet werden, um eine fortlaufende Überwachung der Pumpe zu ermöglichen.

Vorteilhaft ist eine Ausführungsform, wonach das Gaußsche Prozessregressionsmodell anhand von Erfahrungsdaten trainiert wird, um die Genauigkeit der Identifikation und/oder Vorhersage zu erhöhen. Die Erfahrungsdaten sind beispielsweise Daten von Kunden aus einem Kundenfeedback.

Vorteilhaft ist eine Ausführungsform, wonach das Auftreten einer Verstopfung in der Pumpe anhand eines Schwellenwerts basierend auf der Identifikation und/oder Vorhersage in Schritt f) bestimmt wird.

Die vorliegende Erfindung zielt darauf ab, Pumpenverstopfungen in industriellen Pumpensystemen anhand technischer Merkmale wirksam zu erkennen und vorherzusagen.

Es werden vorteilhaft Motorsignale erfasst, wie z. B. Drehzahl, Energieeffizienz und elektrische Leistung, um auf eine Pumpenverstopfung zu schließen, ohne direkte Messungen an der Pumpe selbst vorzunehmen.

Die Motorsignale werden, beispielsweise von einem Niederspannungsmotor, von einer Einheit erfasst, die zur Erfassung von Messdaten ausgebildet ist. Eine weitere Einheit ist vorzugsweise zur kommunikativen Übertragung der Messdaten ausgebildet. Vorteilhaft ist hierbei eine Ausführung, wonach die Erfassung der Messdaten und die Übertragung durch ein Gerät bewerkstelligt werden. Eine Ausführung, wonach hierfür zwei Geräte vorgesehen sind, ist ebenso möglich.

Es werden vorteilhaft die Drehzahl, die Energieeffizienz, die elektrische Leistung und/oder die Schlupffrequenz des Motors gemessen. Auch andere Daten können gemessen werden. Hierfür sind vorteilhaft Sensoren vorgesehen.

Der Vorteil der Erfindung ist, dass durch die Analyse von Motorsignalen, die für den Betrieb der Pumpe verantwortlich sind, Verstopfungsausfälle erkannt und/oder vorhergesehen werden können.

Durch die Verwendung von Drehzahl und Schlupffrequenz werden vorteilhaft die transienten Phasen des Motors bei Betriebspunktwechsel herausgefiltert. Die mechanische Leistung des Motors wird insbesondere durch das Produkt aus Energiewirkungsgrad und elektrischer Leistung bestimmt. Bei der Inbetriebnahme des Geräts, das für die Messdatenerfassung sowie die Kommunikation vorgesehen ist, stellt vorteilhaft ein Kunde die Informationen über die Nenndrehzahl und Nennleistung des Motors zur Verfügung.

Die folgenden Gleichungen werden vorzugsweise verwendet, um einen Indikator zu generieren, der die Wahrscheinlichkeit der Verstopfung eines Rohrs misst.

$$\text{charasterictic coefficient} = \frac{\dfrac{\text{actual mechnical power}}{\text{nominal power}}}{\left(\dfrac{\text{nominal speed}}{\text{actual rotation speed}}\right)^3}$$

$$\text{clogging severity} = 1 - \text{charateristic coefficient}$$

Hierbei beschreibt clogging severity die Verstopfungsschwere, actual mechanical power die Istleistung (mechanisch), nominal power die Nennleistung, nominal speed die Nenndrehzahl, actual rotation speed die Istdrehzahl.

Vorzugsweise anschließend erfolgt eine Datenaufbereitung. Die erfassten Motorsignale werden insbesondere vorverarbeitet, transformiert und standardisiert, um sicherzustellen, dass die Daten für eine genaue Modellierung geeignet sind. Vor dem Training werden Rotationsgeschwindigkeit und mechanische Leistung standardisiert, um zu verhindern, dass ein bestimmtes Merkmal das Modell dominiert.

Im Folgenden ist j die Drehzahl, i ist mechanische Leistung.

Ein Anpassen der Daten gelingt vorzugsweise wie folgt:
Berechnen des Mittelwertes der einzelnen Merkmale in Xtrain:
Der Mittelwert des i-ten Merkmals (mean$_i$ ) wird berechnet wie folgt:

$$\text{mean}_i = \frac{1}{n}\sum_{j=1}^{n} X_{ji}$$

Dabei ist n die Anzahl der Proben, j der Probenindex und i der Merkmalsindex.

Berechnen der Standardabweichung jedes Merkmals in Xtrain:
Die Standardabweichung des i-ten Merkmals (stdi) wird wie folgt berechnet:

$$\text{std}_i = \sqrt{\frac{1}{n}\sum_{j=1}^{n}\left(X_{ji} - \text{mean}_i\right)^2}$$

Ein Transformieren gelingt vorzugsweise wie folgt:
Standardisieren jedes Merkmals:
Der standardisierte Wert des i-ten Merkmals der j-ten Stichprobe (Xji') wird wie folgt berechnet:

$$X'_{ji} = \frac{X_{ji} - \text{mean}_i}{\text{std}_i} Xji'$$

Hierbei ist X'ji der Originalwer des i-ten Merkmals der j-ten Stichprobe.

Der Verschmutzungsschwerdegrad oszilliert vorteilhaft zwischen 0 und 1.

Vor dem Training wird der Verschmutzungsschweregrad mit der folgenden Gleichung in einen nicht-negativen Wert umgewandelt.

$$\text{clogging severity}' = \sqrt{\text{clogging severity}}$$

Anschließend erfolgt vorzugsweise ein Training mit der Gaußschen Prozessregression, auch Gaussian Process Regressor genannt, kurz: GPR.

Es wird vorzugsweise ein Experte für digitale Signalverarbeitung verwendet, um das Ausmaß der Verstopfung zu prognostizieren, indem seine Fähigkeit genutzt wird, komplexe Verbindungen zu verwalten und probabilistische Prognosen zu erstellen. Für das Training des GPR werden vorteilhaft skalierte Merkmale wie Rotationsgeschwindigkeit, also Drehzahl, und mechanische Leistung verwendet. Vorteilhaft wird die Implementierung der Open-Source-Bibliothek sklearn für GPR verwendet.

Zusammengefasst bedeutet dies vorteilhaft: Ein Gaußscher Prozess (GP) ist eine Sammlung von Zufallsvariablen, von denen eine endliche Anzahl eine gemeinsame Gaußsche Verteilung hat. GPR ist ein nicht-parametrischer, Bayes'scher Ansatz zur Regression, der einen probabilistischen Rahmen für die Modellierung der Beziehung zwischen Eingaben und Ausgaben bietet.

Wichtige Komponenten sind hierbei die folgenden.

Definition des Gaußschen Prozesses: Ein GP ist durch seine Mittelwertfunktion $\mu(x)$ und seine Kovarianzfunktion (oder Kernel) $k(x,x')$ vorzugsweise vollständig spezifiziert. Für die Eingaben x und x' wird der GP geschrieben als:

$$f(x) \sim GP\big(\mu(x), k(x, x')\big)$$

Mittlere Funktion $\mu(x)$: Der Einfachheit halber wird vorteilhaft in der Regel der Wert Null angenommen: $\mu(x)=0$

Kovarianzfunktion ($k(x,x')$): Hier werden die Kovarianz zwischen Paaren von Eingabepunkten definiert und die Glättungs- und Generalisierungseigenschaften des GP bestimmt. Eine gängige Wahl ist der RBF-Kernel (Radial Basis Function):

$$k(x, x') = \sigma_f^2 \exp\left(-\frac{||x - x'||^2}{2l^2}\right)$$

Hierbei ist $\sigma_f^2$ die Signalvarianz und I eine Längenskala.

Es erfolgt vorteilhaft eine Regression mit GPR.

Gegeben ist vorteilhaft ein Satz von Trainingsdaten $\{(X, y)\}$, wobei X die Matrix der Eingangsmerkmale und y der Vektor der Zielwerte ist. Die Eingabematrix wird vorteilhaft aus der Drehzahl, der mechanischen Leistung und dem Vektor der Zielvariablen gebildet, die in den Verstopfungsschweregrad transformiert wurden.

Prior-Verteilung: Annahme einer Prior-Verteilung über die Funktionswerte *f* an den Trainingspunkten X an, wobei K(X,X) die mit der Kernel-Funktion berechnete Kovarianzmatrix ist:

$$f \sim \mathcal{N}\big(0, K(X, X)\big)$$

Posterior-Verteilung: Für einen neuen Eingabepunkt x_* ist das Ziel die Vorhersage der korrespondierenden Ausgabe f_*. Die gemeinsame Vertreilung der Trainingsausgaben y und des Funktionswertes am neuen Punkt f_* ist:

$$\begin{bmatrix} y \\ f_* \end{bmatrix} \sim N\left(0, \begin{bmatrix} K(X,X)+\sigma_n^2 I & K(x_*,X) \\ K(X,x_*) & K(x_*,x_*) \end{bmatrix}\right)$$

Hierbei ist $\sigma_n^2$ eine Rauschvarianz. Vorzugsweise wird das Modell durch den Wert $10^{-2}$ stabilisiert.

Prädiktive Verteilung: Die bedingte Verteilung von $f_*$, die den Trainingsdaten gegeben werden, ist vorteilhaft ebenso Gaußsch.

$$f_* \mid X, y, x_* \sim N(\mu_*, \sigma_* 2)$$

mit

$$\mu_* = K(x_*, X)[K(X, X) + \sigma_n^2 I]^{-1} y$$

$$\sigma_*^2 = K(x_*, x_*) - K(\mu_*, X)[K(X, X) + \sigma n2I]^{-1}K(X, x_*)$$

Es wird vorteilhaft ein konstanter Kernel verwendet, der den RBF-Kernel (Radial Basis Function) multipliziert.

Wir verwenden den BCM-Rahmen (kurz für Bayesian Committee Machine), um den Datensatz zu partitionieren und mehrere GPR-Modelle auf Teilmengen der Daten zu trainieren. Dieser Ansatz verbessert die Vorhersagegenauigkeit und ermöglicht die effektive Verarbeitung großer Datensätze.

Ein Schlüsselkonzept der BCM ist beispielsweise die Datenpartitionierung: Der Datensatz wird vorteilhaft in mehrere Teilmengen unterteilt. Jede Teilmenge wird zum Trainieren eines separaten GPR-Modells verwendet. Dadurch wird der Rechenaufwand verringert, da jedes GPR-Modell auf einem kleineren Teil der Daten trainiert wird.

Auch ein Training mehrerer Modelle ist möglich. Jede Teilmenge der Daten wird zum Trainieren eines Gauß-Prozess-Regressors verwendet. Diese einzelnen Modelle werden im Ausschuss als "Experten" bezeichnet.

Ferner ist ein Kombinieren der Vorhersagen möglich. Die Vorhersagen der einzelnen GPR-Modelle werden vorteilhaft kombiniert, um die endgültige Vorhersage zu erstellen. Bei der Kombination wird die Unsicherheit der einzelnen Modellvorhersagen berücksichtigt, um sicherzustellen, dass die endgültige Vorhersage sowohl genau als auch robust ist.

Mathematisch formulieren kann man dies beispielsweise auf die folgende Art.

Teilen des Datensatzes D = {(X,y)} durch Partitionierung in M Partitionen $D_1$, $D_2$, ..., $D_M$. Training des GPR Models: Trainieren eines Gaußschen Prozessregressors auf jede Partition $D_M$., dies führt zu folgenden M Modellen: $GP_1$, $GP_2$, ..., $GP_M$. Individuelle Vorhersage: Für eine neue Eingabe x , stellt jedes GPR model $GP_M$ ein vorhersagendes Mittel mean $\mu m(x_*)$ und Varianz $\sigma_m^2(x_*)$ bereit. Kombinieren der Mittelwerte und Varianz: Der kombinierte Mittelwert $\mu_*$ und Varianz $\sigma_*^2$ werden wie folgt berechnet.

Kombinierter Mittelwert:

$$\mu_* = \frac{\left\{\sum_{\{m=1\}}^{M} \frac{\mu m(x_*)}{\sigma_m^2(x_*)}\right\}}{\left\{\sum_{\{m=1\}}^{M} \frac{1}{\sigma_m^2(x_*)}\right\}}$$

Kombinierte Varianz:

$$\sigma_*^2 = \left\{\sum_{\{m=1\}}^{M} \frac{1}{\sigma_m^2(x_*)}\right\}^{-1}$$

Diese Gleichungen stellen sicher, dass die endgültige Vorhersage das Vertrauensniveau (Varianz) der einzelnen Modelle berücksichtigt und vorteilhaft Modellen mit geringerer Unsicherheit mehr Gewicht verleiht.

Das System berechnet obere und untere Grenzen für den Verstopfungsschweredegrad anhand der kombinierten Vorhersagen der GPR-Modelle. Das System erkennt Anomalien, wenn der Schweregrad der Verstopfung bestimmte berechnete Grenzen überschreitet. Anhand der oben genannten kombinierten Werte können die Obergrenzen für die Verstopfungsschwerde für alle möglichen Drehzahlen und mechanischen Leistungen berechnen.

$$\text{Upper Bound} = \text{Combined Mean} + 1.96\sqrt{\text{Combined Variance}}$$

Vorteilhaft ist zudem ein adaptives Lernen durch Kundenfeedback.

Es ist vorteilhaft, das Modell regelmäßig mit neuen Daten und Kundenfeedback zu aktualisieren, um die Vorhersagegenauigkeit im Laufe der Zeit zu gewährleisten und zu verbessern und an sich verändernde Betriebsbedingungen anzupassen. Kunden können ihr Feedback nach der Durchführung von Wartungsarbeiten, der Erneuerung einer Pumpenkomponente oder nach Fehlalarmen mitteilen. Es können neue oder erweiterte Daten verwendet werden.

Die technischen Merkmale dieser Erfindung bieten insgesamt eine zuverlässige, anpassungsfähige und unauffällige Lösung zur Erkennung und Vorhersage von Pumpenverstopfungen. Damit werden die Nachteile herkömmlicher Methoden behoben und die Entscheidungsfindung bei der Wartung in industriellen Umgebungen verbessert.

Vorteilhaft ist eine Ausführungsform, wonach das Verfahren zusätzliche Sensoren oder Datenquellen verwendet, um die Genauigkeit der Vorhersage zu verbessern, beispielsweise durch Integration von Temperatur-, Druck- oder Durchflussdaten des Elektromotors oder der Pumpe.

Auch derartige Daten können erfasst und zusätzlich benutzt werden.

Vorteilhaft ist eine Ausführungsform, wonach die Messdaten, vorzugsweise drahtlos, an eine Recheneinheit übertragen werden. Dies wird in den Figuren genauer erläutert.

Vorteilhaft ist eine Ausführungsform, wonach die Messdaten in eine Cloud übertragen werden.

Besonders vorteilhaft, findet dort die Identifikation und/oder Vorhersage statt.

Vorteilhaft ist eine Ausführungsform, wonach anhand der Messdaten ein digitaler Zwilling des Elektromotors, und vorzugsweise der Pumpe, gebildet wird.

Die Lösung der Aufgabe gelingt ferner durch ein System, aufweisend eine Pumpe und/oder eine Rohrleitung, einen Elektromotor, eine Messdatenerfassungseinheit, eine Kommunikationseinheit und eine Recheneinheit, zur Durchführung des Verfahrens.

Die Lösung der Aufgabe gelingt ferner durch eine Komponente eines derartigen Systems, insbesondere eine Pumpe und/oder eine Rohrleitung, ein Elektromotor, eine Messdatenerfassungseinheit, eine Kommunikationseinheit und/oder eine Recheneinheit.

Die Lösung der Aufgabe gelingt ferner durch eine Recheneinheit, ausgebildet zur Verbindung mit einem Elektromotor und einer Pumpe und/oder einer Rohrleitung, ausgebildet zur Durchführung des Verfahrens.

Im Folgenden wird die Erfindung anhand der in den Figuren dargestellten Ausführungsbeispiele näher beschrieben und erläutert. Es zeigen:

FIG 1     einen Motor,
FIG 2     eine beispielhafte Kommunikation,
FIG 3     adaptive Konfidenzintervalle für verschiedene Geschwindigkeiten und Leistungen,
FIG 4     ein 3D-Diagramm und
FIG 5     vorteilhafte Schritte des Verfahrens.

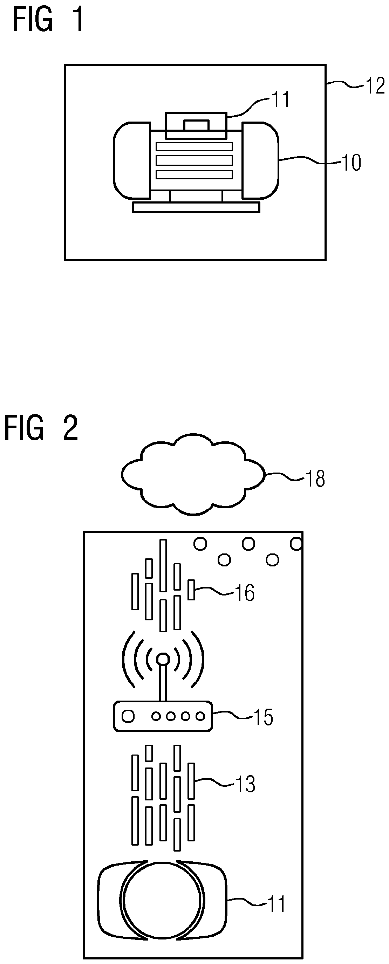

FIG 1 zeigt einen Motor 10. Der Motor 10 kann ein Niederspannungsmotor sein, auch andere Motorarten sind möglich. Der Motor treibt eine Pumpe 12 an. Die Pumpe weist vorteilhaft Rohrleitungen für Zu- und/oder Ablauf auf.

Am Motor 10 ist eine Einheit 11 angeordnet, die zum Erfassen von Messdaten ausgebildet ist. Die Einheit 11 kann beispielsweise Motordaten wie Drehzahl und Leistung, insbesondere mechanische Leistung, erfassen.

Ferner kann die Einheit 11 zur Übertragung der erfassten Daten ausgebildet sein. FIG 2 zeigt eine beispielhafte Kommunikation.

Die Einheit 11 erfasst die Motordaten und überträgt diese vorzugsweise drahtlos an eine Cloud 18. Dies gelingt besonders vorteilhaft, indem die Einheit 11 die Daten an ein WLAN-Modul 15 überträgt. Vom WLAN-Modul 15 gelingt besonders gut eine Übertragung an die Cloud 18.

Es liegt vorteilhaft eine Kommunikationsverbindung 13 zwischen der Einheit 11 und des WLAN-Moduls 15 vor.

Ferner liegt vorteilhaft eine Kommunikationsverbindung 16 zwischen dem WLAN-Modul 15 und der Cloud 18 vor. Auf diese Weise können die Daten besonders gut über das Internet an die Cloud gesendet werden. Ein Senden der Daten ist von vielen Orten auf der Welt möglich.

Alternativ oder zusätzlich kann auch ein anderer Kommunikationsweg als das Internet verwendet werden.

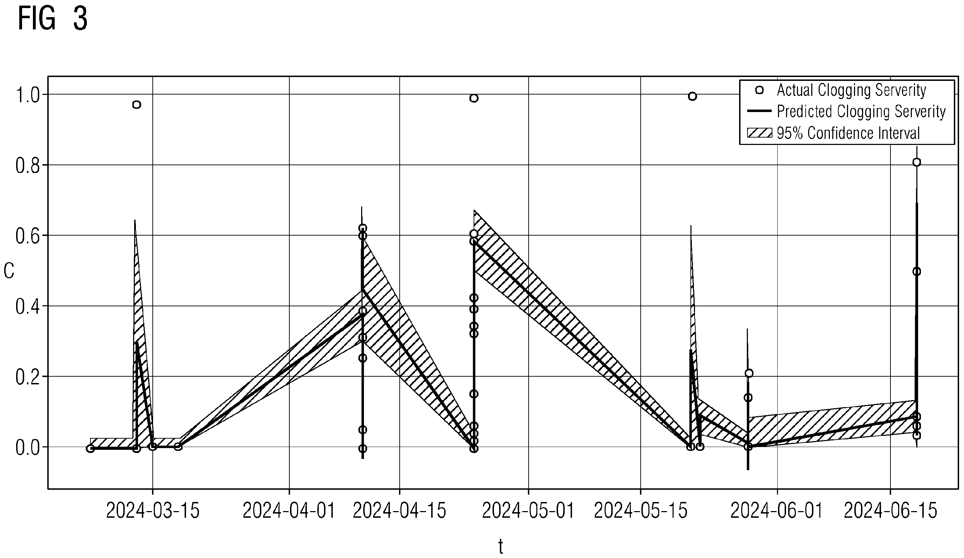

In FIG 3 werden adaptive Konfidenzintervalle für verschiedene Geschwindigkeiten und Leistungen gezeigt.

Die X-Achse steht für die Zeit t und die Y-Achse für den Verstopfungsschweregrad C. Die gestrichelten Linien zeigen die vorhergesagte Verstopfungsschwere und die Konfidenzintervalle für verschiedene Drehzahlen und mechanische Leistungen.

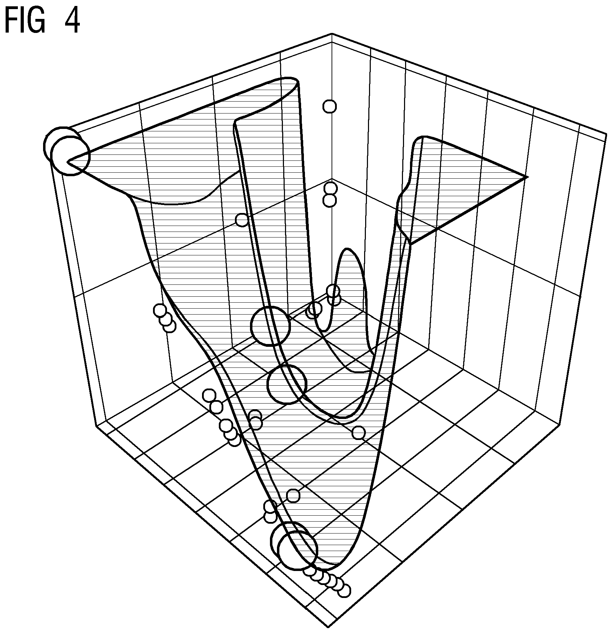

In FIG 4 visualisiert das 3D-Diagramm die Beziehung zwischen Rotationsgeschwindigkeit bzw. Drehzahl n, P2 und Verstopfungsschweregrad, wobei die kleinen Punkte bzw. die kleinen Kreise die tatsächlichen Werte für den Verstopfungsschweregrad darstellen und die großen Punkte bzw. die großen Kreise die Ausreißer anzeigen, bei denen der Verschmutzungsgrad die vorhergesagte Obergrenze überschreitet.

Die gestrichelte Fläche zeigt die vom Modell vorhergesagte Obergrenze für den Verschmutzungsgrad an und stellt den Schwellenwert für die Erkennung von Anomalien dar. Diese Visualisierung hebt hervor, wo die Vorhersagen des Modells mit den tatsächlichen Daten übereinstimmen, und identifiziert Bereiche, die aufgrund von Motorsignalen Anlass zur Sorge über potenzielle Pumpenprobleme geben.

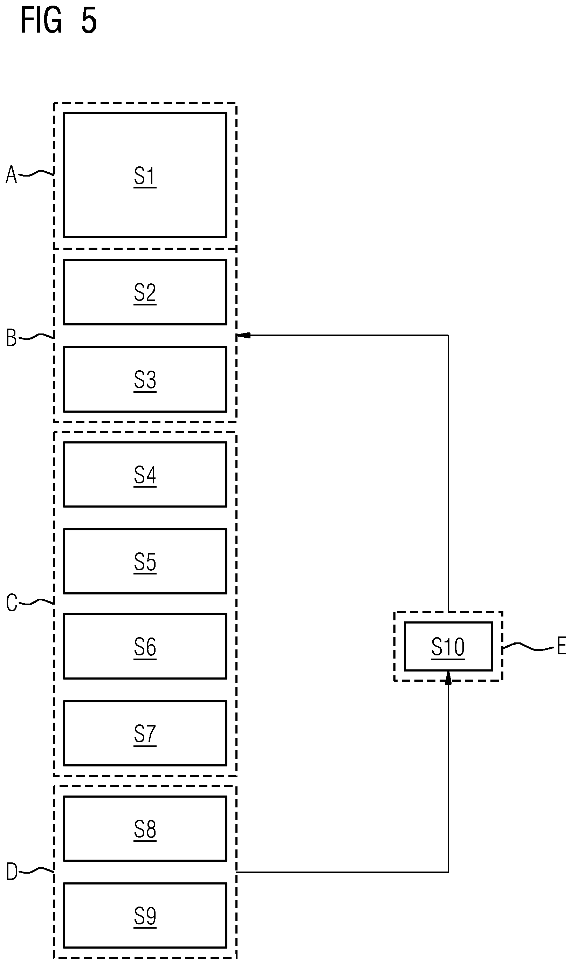

FIG 5 zeigt vorteilhafte Schritte des Verfahrens.

In einem Verfahrensschritt S1 erfolgt ein Ermitteln wenigstens eines Indikators für die Verstopfungsschwere anhand von Ist- und/oder Nennwerten, insbesondere von Drehzahl und/oder Leistung des Motors.

In A wird somit Expertise im Bereich der sensorgestützten Überwachung erlangt.

In einem Verfahrensschritt S2 erfolgt eine Verwendung eines oder mehrerer Verstopfungsschweregradindikatoren sowie der zugehörigen Drehzahl und/oder Leistung zur Ausstattung und/oder Anpassung der GPR.

In einem Verfahrensschritt S3 erfolgt eine Standardisierung von Drehzahl und mechanischer Leistung und Umwandlung in den Verstopfungsschweregrad. Nicht negative Fälle werden vorteilhaft eliminiert.

Die Verfahrensschritte S2 und S3 sind hierbei in einem Block B gezeigt, der einer Datenvorbereitung gewidmet ist.

In einem Verfahrensschritt S4 erfolgt eine Unterteilung der Daten in Partitionen zur Verringerung eines Berechnungsaufwands.

In einem Verfahrensschritt S5 erfolgt ein Training mit GPR für jede Partition sowie ein Speichern jedes Mittelwerts und jeder Varianz.

In einem Verfahrensschritt S6 erfolgt ein Kombinieren aller Varianzen und Mittelwerte, um einen Zuverlässigkeitsgrad für verschiedene Drehzahlen und Leistungen zu ermitteln

In einem Verfahrensschritt S7 erfolgt ein Definieren von Schwellwerten für Drehzahl und Leistung.

In einem Verfahrensschritt S8 erfolgt eine Standardisierung neu hinzukommender Daten für Drehzahl und Leistung und eine Umwandlung

In einem Verfahrensschritt S9 erfolgt ein Vergleichen der neu ermittelten Werte für den Verstopfungsschweregrad mit dem Schwellwert, die die abgebildete Drehzahl und die mechanische Leistung definiert.

Der Block C beschreibt vorteilhafte Schritte des Trainings, Block D das Erlangen einer Expertise im Erkennen von Anomalien.

Durch Rückmeldung eines Kunden, siehe Verfahrensschritt S10, kann das Modell erweitert bzw. erneuert bzw. überarbeitet werden, es gelingt in Block E ein adaptives Lernen auf Basis des Kundenfeedbacks.

Die vorliegende Erfindung verfolgt einen nicht-intrusiven Ansatz, indem sie Motorsignale wie Drehzahl, Energieeffizienz und elektrische Leistung zur Erkennung von Pumpenverstopfungen nutzt, ohne dass direkte Messungen an der Pumpe erforderlich sind. Es werden vorteilhaft fortschrittliche Techniken des maschinellen Lernens genutzt, insbesondere die Gaußsche Prozessregression (GPR) im Rahmen einer Bayes'schen Komitee-Maschine (BCM), um genaue und probabilistische Vorhersagen mit quantifizierten Unsicherheiten zu liefern und große Datensätze effizient zu verarbeiten.

Im Gegensatz dazu beruhen bestehende Lösungen oftmals lediglich auf direkten Messungen, insbesondere Durchfluss und Druck, die einen größeren Eingriff darstellen.

Die Fähigkeit der vorliegenden Erfindung, ihre Modelle mit neuen Daten zu aktualisieren, sorgt für langfristige Robustheit und Zuverlässigkeit.

Die vorliegende Erfindung befasst sich mit dem Problem der genauen Erkennung und Vorhersage von Pumpenverstopfungen durch den Einsatz eines Gaußschen Prozessregressors (GPR) im Rahmen einer Bayes'schen Ausschussmaschine (BCM). Dieser fortschrittliche Ansatz bietet mehrere bedeutende Vorteile:

Beispielsweise eine erhöhte Vorhersagegenauigkeit: Das GPR-Modell, das für seine Fähigkeit bekannt ist, mit komplexen Beziehungen umzugehen und probabilistische Vorhersagen zu treffen, ermöglicht eine präzisere Bewertung des Verstopfungsschweregrads anhand von Eingangsparametern wie Drehzahl, Energieeffizienz und Stromverbrauch.

Vorteilhafter Umgang mit großen Datensätzen: Mit dem BCM-Rahmenwerk kann das Modell größere Datensätze effektiv handhaben, indem es die Daten in Partitionen aufteilt und mehrere GPR-Modelle für jede Teilmenge trainiert. Dadurch verringert sich der Rechenaufwand für das Training eines einzelnen GPR-Modells auf einem großen Datensatz, was die Skalierbarkeit und Effizienz des Modells erhöht.

Quantifizierung der Ungewissheit: Die probabilistische Natur des GPR ermöglicht zusammen mit dem BCM-Rahmen die Messung der Unsicherheit in den Vorhersagen. Diese Funktion ist vorteilhaft, um fundierte Wartungsentscheidungen zu treffen und vorausschauende Wartungsstrategien zu implementieren, mit denen potenzielle Verstopfungsprobleme proaktiv angegangen werden können, bevor sie zu Betriebsunterbrechungen führen.

Vorteilhafte nicht-intrusive Erkennung: Die Erfindung analysiert speziell Motorsignale, wie z. B. Drehzahl, Energieeffizienz, elektrische Leistung und erzeugte mechanische Leistung, um Pumpenverstopfungen zu erkennen. Durch die Nutzung von Motorsignalen macht das System direkte Messungen an der Pumpe überflüssig, was zu einem nicht-invasiven und kostengünstigen Erkennungsprozess führt.

Dieser Ansatz vereinfacht die Implementierung des Erkennungssystems und minimiert den Bedarf an zusätzlichen Sensoren oder Anpassungen an der Pumpenausrüstung.

Adaptive und robuste Detektion: Diese Erfindung kombiniert die Stärken von GPR und BCM, um Verstopfungen flexibel und zuverlässig zu erkennen. Neue Daten können das Modell mit entsprechendem Kundenfeedback ständig aktualisieren, so dass seine Belastbarkeit und Genauigkeit auch bei sich ändernden Betriebsbedingungen gewährleistet ist.

Durch die Bewältigung dieser Herausforderungen verbessert die Erfindung die Zuverlässigkeit und Effizienz des Pumpenbetriebs in industriellen Umgebungen erheblich.

Sie hilft, Ausfallzeiten und Wartungskosten zu minimieren, indem sie Unregelmäßigkeiten in den Motorsignalen identifiziert, die auf eine Pumpenblockade hindeuten. Dieser Ansatz verbessert die Gesamtleistung des Systems, ohne dass störende Sensoren oder direkte Messungen an der Pumpe erforderlich sind. Das vorteilhafte Ergebnis ist eine rationalisierte und effektive Lösung zur Erkennung und Vorhersage von Pumpenverstopfungen.

**Patentansprüche**

1. Verfahren zur Identifikation und/oder Vorhersage einer Verstopfung in einer Pumpe (12) und/oder einer Rohrleitung der Pumpe, die durch einen Elektromotor (10) angetrieben wird, unter Verwendung der Gaußschen Prozessregression, wobei die Vorhersage basierend auf den Daten des Elektromotors (10) getroffen wird, umfassend folgende Schritte:

   a) Erfassen von Messdaten des Elektromotors (10);
   b) Extrahieren von Merkmalen aus den erfassten Messdaten des Elektromotors (10) zur Vorbereitung eines Datensatzes;
   c) Partitionieren des Datensatzes, insbesondere mittels einer Bayesian Committee Machine, zum Erhalt einer Unterteilung in Datensätze, darunter einen Datensatz mit Trainingsdaten;
   d) Modellieren der Beziehung zwischen den extrahierten Merkmalen des Elektromotors (10) und dem Auftreten einer Verstopfung in der Pumpe (12) und/oder der Rohrleitung unter Verwendung der Gaußschen Prozessregression auf den Trainingsdaten;
   e) Anpassen des durch Schritt d) erhaltenen Gaußschen Prozessregressionsmodells anhand der Trainingsdaten, um eine Identifikation und/oder Vorhersage des Auftretens einer Verstopfung in der Pumpe und/oder der Rohrleitung zu ermöglichen;
   f) Durchführen einer Identifikation und/oder Vorhersage des Auftretens einer Verstopfung in der Pumpe und/oder der Rohrleitung basierend auf dem angepassten Gaußschen Prozessregressionsmodell auf den Testdaten;
   g) Ausgeben eines Indikators und/oder einer Warnmeldung, um das Auftreten einer Verstopfung in der Pumpe (12) und/oder der Rohrleitung anzuzeigen.

2. Verfahren nach Anspruch 1, wobei die Messdaten des Elektromotors (10) physikalische Parameter, Betriebsparameter und/oder Zustandsparameter des Elektromotors sind.

3. Verfahren nach einem der vorhergehenden Ansprüche, wobei die Messdaten des Elektromotors (10) Drehzahl, Energieeffizienz, Schlupffrequenz und/oder Leistung, vorzugsweise mechanische Leistung, sind.

4. Verfahren nach einem der vorhergehenden Ansprüche, wobei die Messdaten des Elektromotors (10) kontinuierlich erfasst und, vorzugsweise in Echtzeit, verarbeitet werden, um eine fortlaufende Überwachung der Pumpe (12) und/oder Rohrleitung zu ermöglichen.

5. Verfahren nach einem der vorhergehenden Ansprüche, wobei das Gaußsche Prozessregressionsmodell anhand von Erfahrungsdaten trainiert wird, um die Genauigkeit der Identifikation und/oder Vorhersage zu erhöhen.

6. Verfahren nach einem der vorhergehenden Ansprüche, wobei das Auftreten einer Verstopfung in der Pumpe (12) und/oder Rohrleitung anhand eines Schwellenwerts basierend auf der Identifikation und/oder Vorhersage in Schritt f) bestimmt wird.

7. Verfahren nach einem der vorhergehenden Ansprüche, wobei das Verfahren zusätzliche Sensoren oder Datenquellen verwendet, um die Genauigkeit der Vorhersage zu verbessern, beispielsweise durch Integration von Temperatur-, Druck- oder Durchflussdaten des Elektromotors (10) und/oder der Pumpe (12) und/oder der Rohrleitung.

8. Verfahren nach einem der vorhergehenden Ansprüche, wobei die Messdaten, vorzugsweise drahtlos, an eine Recheneinheit übertragen werden.

9. Verfahren nach einem der vorhergehenden Ansprüche, wobei die Messdaten in eine Cloud (18) übertragen werden.

10. Verfahren nach einem der vorhergehenden Ansprüche, wobei anhand der Messdaten ein digitaler Zwilling des Elektromotors (10), und vorzugsweise der Pumpe (12) und/oder der Rohrleitung, gebildet wird.

11. System, aufweisend eine Pumpe (12) und/oder eine Rohrleitung, einen Elektromotor (10), eine Messdatenerfassungseinheit, eine Kommunikationseinheit und eine Recheneinheit, zur Durchführung des Verfahrens nach einem der Ansprüche 1 bis 10.

12. Komponente eines Systems nach Anspruch 11, insbesondere eine Pumpe (12) und/oder eine Rohrleitung, ein Elektromotor (10), eine Messdatenerfassungseinheit, eine Kommunikationseinheit und /oder eine Recheneinheit.

13. Komponente nach Anspruch 12, ausgebildet als Recheneinheit, ausgebildet zur Verbindung mit einem Elektromotor (10) und einer Pumpe (12) und/oder einer Rohrleitung, ausgebildet zur Durchführung des Verfahrens nach einem der Ansprüche 1 bis 10.

FIG 1

FIG 2

FIG 3

EP 4 686 995 A1

FIG 4

FIG 5

Europäisches
Patentamt

European
Patent Office

Office européen
des brevets

## EUROPÄISCHER RECHERCHENBERICHT

Nummer der Anmeldung

EP 24 19 1755

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | QODIROV SHAHBOZ ET AL: "Development of Artificial Neural Network for Predicting Drill Pipe Sticking in Real-Time Well Drilling Process", 2020 GLOBAL SMART INDUSTRY CONFERENCE (GLOSIC), IEEE, 17. November 2020 (2020-11-17), Seiten 139-144, XP033866980, DOI: 10.1109/GLOSIC50886.2020.9267873 [gefunden am 2020-11-23] | 12 | INV. G05B23/02 F04B49/06 F04B51/00 F04D15/00 |
| A | * das ganze Dokument * ----- | 1-11,13 | |
| X | CN 109 611 077 A (UNIV BOHAI) 12. April 2019 (2019-04-12) | 12 | |
| A | * Absatz [0001] - Absatz [0008] * ----- | 1-11,13 | |
| A | KUMAR DHIRAJ ET AL: "Identification of inlet pipe blockage level in centrifugal pump over a range of speeds by deep learning algorithm using multi-source data", MEASUREMENT, INSTITUTE OF MEASUREMENT AND CONTROL. LONDON, GB, Bd. 186, 22. September 2021 (2021-09-22), XP086850653, ISSN: 0263-2241, DOI: 10.1016/J.MEASUREMENT.2021.110146 [gefunden am 2021-09-22] * das ganze Dokument * ----- | 1-13 | RECHERCHIERTE SACHGEBIETE (IPC) G05B F04B F04D |

Der vorliegende Recherchenbericht wurde für alle Patentansprüche erstellt

| Recherchenort | Abschlußdatum der Recherche | Prüfer |
|---|---|---|
| München | 15. Januar 2025 | Kuntz, Jean-Marc |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 24 19 1755

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

15-01-2025

| Im Recherchenbericht angeführtes Patentdokument | Datum der Veröffentlichung | Mitglied(er) der Patentfamilie | Datum der Veröffentlichung |
|---|---|---|---|
| CN 109611077 A | 12-04-2019 | KEINE | |

Für nähere Einzelheiten zu diesem Anhang : siehe Amtsblatt des Europäischen Patentamts, Nr.12/82

EPO FORM P0461